Europäisches Patentamt

European Patent Office

Office européen des brevets

(19)

(11) Veröffentlichungsnummer: **0 179 198**

**A2**

(12) # EUROPÄISCHE PATENTANMELDUNG

(21) Anmeldenummer: **85107406.2**

(22) Anmeldetag: **15.06.85**

(51) Int. Cl.⁴: **A 47 B 17/00**
**F 16 B 12/32**

(30) Priorität: **24.10.84 DE 3438853**

(43) Veröffentlichungstag der Anmeldung:
**30.04.86 Patentblatt 86/18**

(84) Benannte Vertragsstaaten:
**AT BE CH DE FR GB IT LI NL**

(71) Anmelder: **Gesika Büromöbelwerk GmbH & Co. KG**
**Salzkotter Strasse**
**D-4787 Geseke(DE)**

(72) Erfinder: **Hildebrandt, Norbert**
**Im Niederfeld 4**
**D-4782 Erwitte 1(DE)**

(72) Erfinder: **Becker, Norbert**
**Weringhauser Strasse 15**
**D-4782 Erwitte 2(DE)**

(74) Vertreter: **Patentanwälte Dipl.-Ing. Bodo Thielking**
**Dipl.-Ing. Otto Elbertzhagen**
**Gadderbaumer Strasse 20**
**D-4800 Bielefeld 1(DE)**

(54) **Büromöbel mit Metallgestell.**

(57) Bei einem Büromöbel, beispielsweise einem Schreibtisch, Schrank, einer Trennwand oder dergleichen, mit einem Metallgestell weist das Metallgestell ein erstes Profil (1) mit zwei einander gegenüberliegenden, zum Nutgrund sich verjüngenden Nuten (1a; 2a) auf. Es ist ferner ein zweites gleichartiges Profil (2) neben und parallel zu dem ersten Profil (1) angeordnet. Dabei sind zwei im Querschnitt etwa U-förmige Klemmelemente (3) vorgesehen, deren Basis jeweils von einer gemeinsamen Spannschraube (5) durchsetzt ist. Jedes Klemmelement (3) greift sowohl in eine Nut (1a) des ersten (1), als auch (2a) des zweiten Profils (2) ein. Dieses Verbindungsprinzip schafft eine extrem hohe Flexibilität für die Gestaltung und Anordnung von Büromöbeln. Dabei wird gleichzeitig eine besonders feste Verbindung zwischen den verschiedenen Metallgestellteilen erzeugt.

FIG. 1

Croydon Printing Company Ltd

- 1 -

## Büromöbel mit Metallgestell

Die Erfindung betrifft ein Büromöbel, beispielsweise einen Schreibtisch, Schrank, Trennwand oder dergleichen, mit einem Metallgestell.

Am weitesten verbreitet sind Büromöbel mit geschweißten Metallgestellen. Solche geschweißten Metallgestelle sind zwar relativ einfach, sie bieten jedoch keinerlei Flexibilität, wie sie heute bei Büromöbelsystemen gefordert wird.

Es ist auch bereits bekannt, die Metallgestelle von Büromöbeln aus Einzelteilen zusammenzusetzen, welche miteinander verschraubt werden. So ist es beispielsweise bekannt, den Rahmen eines Büromöbelstücks mit Hilfe einer Klemmverbindung zusammenzufügen, die eine Aufnahme für einen Zapfen aufweist und den Zapfen in der Aufnahme mit Hilfe einer Spannschraube festzuziehen. Eine derartige bekannte Konstruktion erlaubt zwar eine besonders feste Ausgestaltung eines Verbindungspunkts, sie erlaubt jedoch nicht, die Lage der Verbindungsstelle zu verändern, ohne Rahmenteile auszuwechseln.

- 2 -

- 2 -

Ausgehend von diesem Stand der Technik liegt der Erfindung die Aufgabe zugrunde, ein Büromöbel mit einem Metallgestell zu schaffen, das sowohl hinsichtlich der Anwendung als auch hinsichtlich der Verbindungsstellen zwischen verschiedenen Metallteilen sehr flexibel ist.

Die Lösung dieser Aufgabe erfolgt erfindungsgemäß dadurch, daß das Metallgestell ein erstes Profil mit zwei einander gegenüberliegenden, zum Nutgrund sich verjüngenden Nuten aufweist, ferner ein zweites, gleichartiges Profil, das neben und parallel zu dem ersten angeordnet ist, wobei zwei im Querschnitt etwa U-förmige Klemmelemente vorgesehen sind, deren Basis jeweils von einer gemeinsamen Spannschraube durchsetzt ist, wobei jedes Klemmelement sowohl in eine Nut des ersten als auch des zweiten Profils eingreift.

Ein solches Verbindungsprinzip schafft eine extrem hohe Flexibilität für die Gestaltung und Anordnung von Möbeln, vorzugsweise Büromöbeln. Sie erlaubt den in unterschiedlichen Winkeln und Ebenen erfolgenden Anschluß vom Metallgestellteilen aneinander und damit eine praktisch unbegrenzte Variationsvielfalt. Durch die Gestaltung der mit einander formschlüssig im Eingriff stehenden Teile wird trotz der großen Flexibilität gleichwohl eine besonders feste Verbindung zwischen den verschiedenen Metallgestellteilen erzeugt. Dabei kann die Anschlußstelle der verschiedenen Metallteile in Profillängsrichtung beliebig verschoben werden, ohne daß hierzu Änderungen des Profils nötig wären.

- 3 -

- 3 -

Bei einer bevorzugten Ausführungsform ist zwischen den Nuten eines jeden Profils ein metallischer Stegbereich vorgesehen und die Spannschrauben sind zum Zusammenziehen der U-förmigen Klemmelemente ausgebildet.

Bei einer solchen Profilausbildung ist der Funktionsbereich im Querschnitt etwa K-förmig ausgebildet. Eine solche Ausbildung erweist sich als besonders zweckmäßig, weil sie es erlaubt, die erforderlichen Spannelemente und deren Gegenstücke besonders klein auszubilden.

Bei einer anderen Ausführungsform sind die beiden Nuten eines jeden Profils an einander gegenüberliegenden Wänden eines gemeinsamen Kanals angeordnet. Dabei ist die Spannschraube für ein Spreizen der U-förmigen Klemmelemente ausgebildet.

Bei einer solchen Ausführungsform werden die Klemmelemente von den funktionstragenden Profilbereichen umschlossen und liegen damit innerhalb eines durch benachbarte Profile gebildeten gemeinsamen Längskanals.

Gemäß einem weiteren Merkmal der Erfindung ist mindestens eines der beiden Profile und mindestens eines der beiden Klemmstücke mit einem Metallrohr verbunden.

Dabei ist es zweckmäßig, daß eines der Klemmstücke mit einem Metallfuß verbunden ist.

- 4 -

- 4 -

Bei einer derartigen Ausgestaltung ist es im Gegensatz zu allen bisher bekannten Verbindungslösungen für die Füße von Metallrahmen eines Schreibtisches mit den übrigen Metallrahmenteilen möglich, den horizontal gemessenen Abstand der Metallfüße von der Vorderkante bzw. Hinterkante der Schreibtischplatte zu verändern. Dies erweist sich als besonders großer Vorteil bei im Bürobereich üblicher Verkettung von Büromöbeln. Während früher in einem solchen Fall ein ganzes Seitenteil ausgetauscht werden mußte, genügt bei der erfindungsgemäßen Lösung ein Lösen, danach erfolgendes Querverschieben und anschließend wieder erfolgendes Fixieren des zu versetzenden Fußes.

Es hat sich als vorteilhaft erwiesen, daß die Metallprofile gezogene Aluminiumprofile sind, die über Schraubverbindungen mit den benachbarten Möbelteilen verbunden sind.

Dabei ist es zweckmäßig, daß auf einem der beiden Klemmelemente ein Vorsprung zur Befestigung von Zusatzausrüstungsteilen vorgesehen ist.

Bei einer solchen Ausführungsform haben die Klemmelemente einen Zusatznutzen. Sie erlauben beispielsweise das Aufstecken eines Telefonträgers. Die Anschlußstelle des Telefonträgers kann dabei praktisch an beliebiger Stelle entlang der Längserstreckung der Profile gewählt werden.

Statt eines Vorsprungs kann nach einem anderen Merkmal der Erfindung auf einem der Klemmelemente auch eine

- 5 -

- 5 -

Ausnehmung zur Befestigung von Zusatzausrüstungsteilen
vorgesehen sein.

Es hat sich als zweckmäßig erwiesen, daß die Seitenwände der sich zum Nutgrund verjüngenden Nuten in
einem spitzen Winkel zueinander verlaufen und daß der
Winkel der damit korrespondierenden Außenflächen
der Klemmelemente geringfügig größer ist.

Es hat sich ferner als zweckmäßig erwiesen, daß die
Winkel der Nuten bzw. der Klemmstücke etwa dem
doppelten Winkel des Haftreibwertes entsprechen.

Schließlich wird erfindungsgemäß noch vorgeschlagen,
daß in benachbarte Profilbereiche Kunststoffabdeckprofile
eingreifen.

Nachstehend werden bevorzugte Ausführungsformen der Erfindung anhand der Zeichnung im einzelnen beschrieben.
Es zeigen:

Figur 1  -  eine Prinzipskizze einer ersten Ausführungsform im Schnitt,

Figur 2  -  eine konstruktive Ausführungsform im Schnitt,
            die dem in Figur 1 dargestellten Prinzip
            entspricht,

Figur 3  -  einen Schnitt durch eine Verbindungsstelle
            von zwei Trennwandbereichen,

Figur 3a -  eine alternative Ausführungsform analog Figur 3,

- 6 -

Figur 4 - eine Anschlußstelle von vier aneinanderstoßenden Trennwänden,

Figur 5 - eine konstruktive Ausführungsform einer
anderen Verbindungsstelle,

Figur 6 - eine Anschlußstelle für den Fuß eines
Schreibtisches,

Figur 7 - eine Darstellung eines speziellen Klemmelements, das zur Aufnahme von Zusatzeinrichtungen ausgebildet ist,

Figur 8 - eine perspektivische schematische Darstellung zweier
gegeneinander versetzter Tischbereiche.

In den verschiedenen Ausführungsformen sind einander entsprechende Teile mit den gleichen Bezugszeichen bezeichnet. Sie unterscheiden sich lediglich durch Hochstriche
voneinander.

Bei allen Büromöbeln besitzt das Metallgestell ein
erstes Profil 1 mit zwei einander gegenüberliegenden,
zum Nutgrund sich verjüngenden Nuten 1a and 1b sowie
ein zweites Profil 2 mit entsprechend ausgebildeten und angeordneten Nuten 2a und 2b.
In die Nute 1a und die benachbarte Nute 2a greifen die
Schenkel des im Querschnitt U-förmigen Klemmelements 3
ein. In die benachbarten Nuten 1b und 2b greifen die
Schenkel des Klemmstücks 4 ein. Die Basis sowohl des
Klemmstücks 3 als auch des Klemmstücks 4 wird jeweils
durchsetzt von einer Spannschraube 5, die eine Spannmutter 6 trägt.

Die Seitenwände der in den Profilen angeordneten Nuten

- 7 -

laufen unter einem spitzen Winkel $\alpha$ zusammen. Die in die Nuten eingreifenden Seitenwände der Klemmstücke 3 und 4 laufen unter einem spitzen Winkel $\alpha'$ zusammen. Der Winkel $\alpha'$ ist geringfügig größer als der Winkel $\alpha$. Die Winkel sind so gewählt, daß sie je nach der gewünschten Werkstoffpaarung etwa dem doppelten Winkel des Haftreibwerts entsprechen. Durch die geringfügig unterschiedliche Winkelausbildung von $\alpha$ und $\alpha'$ wird eine ausgezeichnete Form- und Kraftschlüssigkeit beim Spannen der Verbindung erzielt und gleichzeitig eine gute Trennbarkeit beim Lösen der Verbindung.

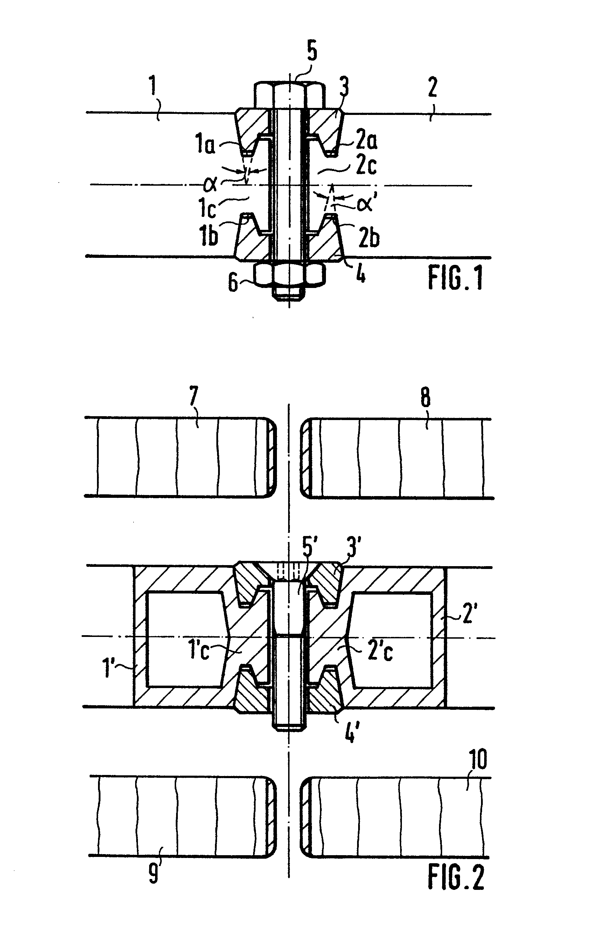

Bei der Ausführungsform gemäß Figur 2 ist der grundsätzliche Aufbau unverändert gegenüber Figur 1. Die dargestellte Rahmenverbindung kann beispielsweise für Trennwände verwendet werden, welche die Kaschierteile 7, 8, 9 und 10 aufweisen. Die Schraube 5' ist als Senkschraube mit Innensechskant ausgebildet, welche in ein Gewinde des Klemmstücks 4' eingreift. Die Profile 1' und 2' sind als Hohlprofile ausgebildet. Deren Anschluß an die benachbarten Metallbereiche ist nicht näher dargestellt. Im Nutenbereich sind die Profile im Schnitt bei den meisten Ausführungsformen K-förmig ausgebildet. Zwischen den Nuten befindet sich jeweils ein metallischer Stegbereich 1c bzw. 2c.

Die gewählte Anordnung der Verbindung erlaubt die Erstellung einer in verschiedener Hinsicht hochbelastbaren Verbindung. Es können hohe Zug-, Druck-, Biege-, Scher- und Drehbeanspruchungen aufgenommen werden.

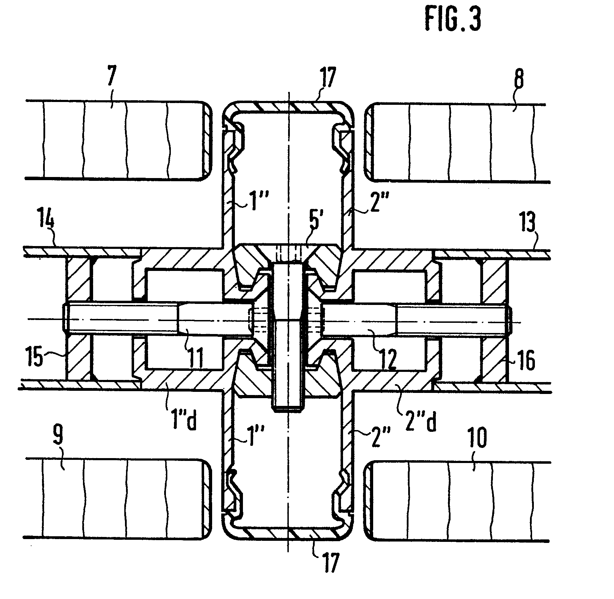

Die Ausführungsform gemäß Figur 3 zeigt einen ähnlichen Aufbau wie Figur 2. Dort ist gezeigt, wie die Profile 1" bzw. 2" über Schrauben 11 und 12 mit den sich anschließenden

- 8 -

Rohren 13 und 14 verschraubt sind. Die Eisenrohre
13 und 14 tragen jeweils angeschweißte Muttern 15 und
16. Beim Anziehen der Schrauben 11 und 12 werden
die Ansätze 1"d bzw. 2"d der Profile 1" bzw. 2" fest
mit den benachbarten Metallrohren 14 bzw. 13 verschraubt.

Die Profile 1" und 2" besitzen vorspringende Schenkel,
die gemeinsam einen oberen und einen unteren Kanal
bilden. Die beiden Kanäle sind durch eingeschnappte
Kunststoffabdeckprofile 17 abgedeckt und können zur Aufnahme von Kabeln oder dergleichen verwendet werden.

Figur 3a zeigt eine zu Figur 3 analoge Ausführungsform.
Bei dieser Ausführungsform sind die Nuten 1'''a und
1'''b an den Seitenwänden eines Kanals des ersten Profils
1''' vorgesehen. Entsprechend sind die Nuten 2'''a und
2'''b angeordnet. Das Verspannen der beiden Profile 1'''
und 2''' erfolgt über ebenfalls U-förmige Klemmstücke
3 und 4, deren Schenkel jeweils nach außen gerichtet
sind. Eine Spreizschraube 5" ist als Innensechskantschraube ausgebildet und drückt beim Verdrehen die
beiden Klemmstücke 3 und 4 auseinander. Hierdurch erfolgt ein Zusammenspannen der beiden Profile 1''' und
2'''.

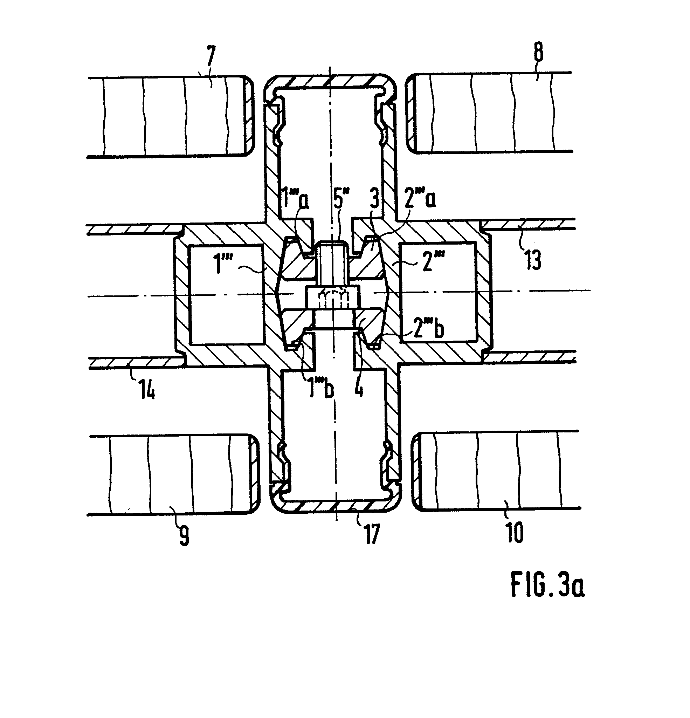

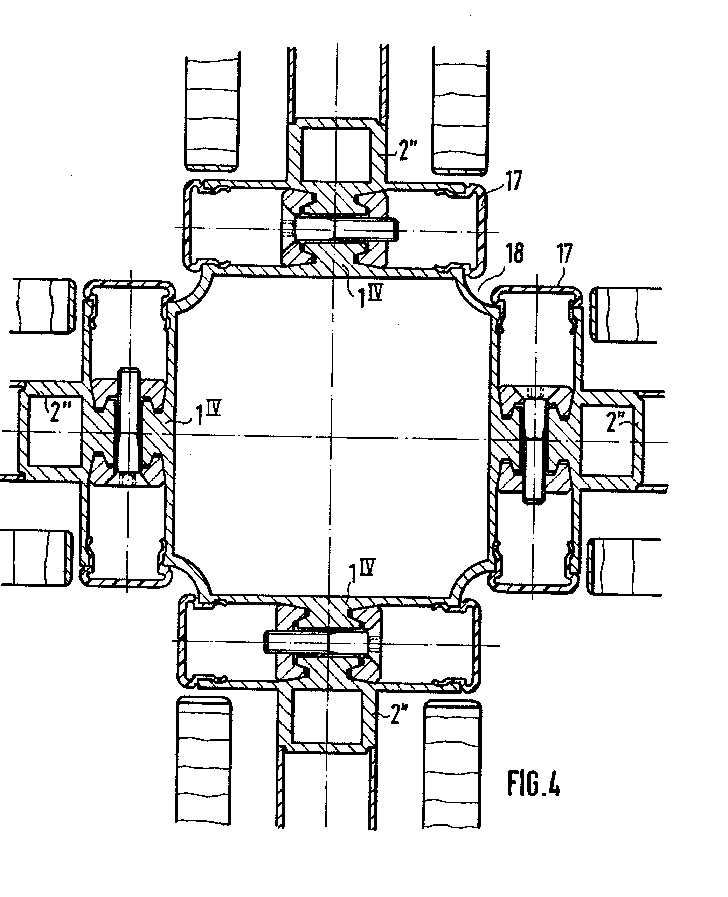

Bei der Ausführungsform gemäß Figur 4 ist die Anwendung des dargestellten Verbindungsprinzips an einem
zentralen Rohr 18 dargestellt. Dieses zentrale Rohr
18 hat jeweils um 90° zueinander versetzt erste Profilbereiche 1"".  Die damit korrespondierenden Profilbereiche 2"" entsprechen in ihrer Anordnung und Ausbildung den zweiten Profilbereichen 2" gemäß Figur 3.

- 9 -

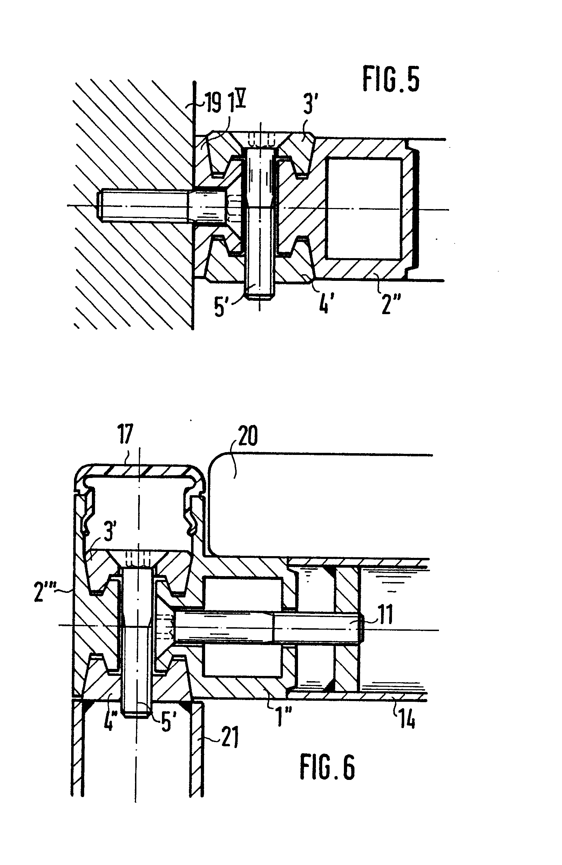

In Figur 5 ist ein erstes Profil 1""' an ein nicht näher dargestelltes Möbelteil 19 angeschraubt. Es ist verbunden mit einem zweiten Profil 2" in der bereits beschriebenen Weise.

Bei der Ausführungsform gemäß Figur 6 ist das erste Profil 1" mit dem Metallrohr 14 verbunden. Auf dem Metallrohr 14 liegt eine Tischplatte 20. Das Klemmstück 4" ist mit einem Fuß 21 verschweißt. Der Fuß 21 des dargestellten Schreibtischbereichs kann entlang der Längsachsen des ersten Profils 1" und des zweiten Profils 2"' fixiert werden. Das Kunststoffabdeckprofil 17 schließt einen durch die beiden Profile gebildeten Kabelkanal ein.

Das zweite Profil 2"' kann leicht entfernt werden und es ist dann ohne weiteres möglich, an der gemäß Figur 6 rechten Seite eine weitere Schreibtischplatte mit einem vollständigen Profil 2" anzuschließen.

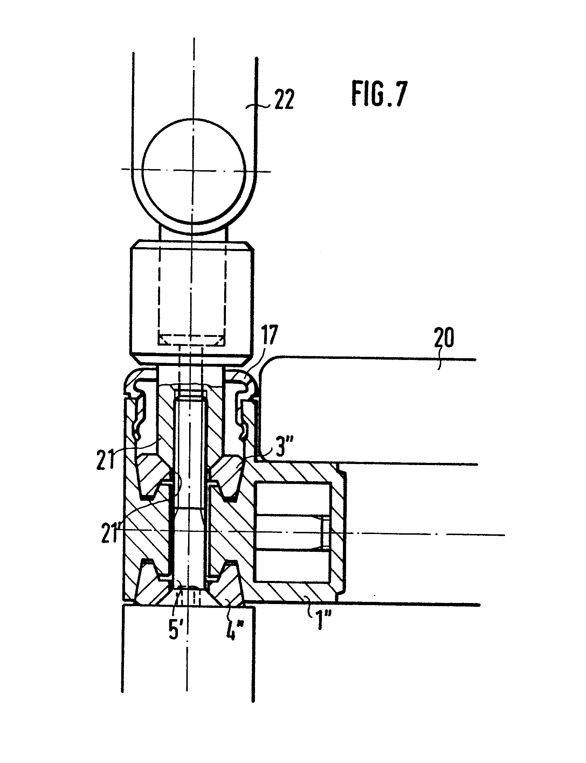

Figur 7 zeigt eine Verbindung, die von einer Spannschraube 5' durchsetzt ist. Diese Spannschraube 5' greift in einen zapfenartigen Vorsprung 21 ein, in den ein Telefonträger 22 eingesteckt ist.

Es kann die Ausnehmung 21' zur Aufnahme eines Zusatzelements ausgebildet sein.

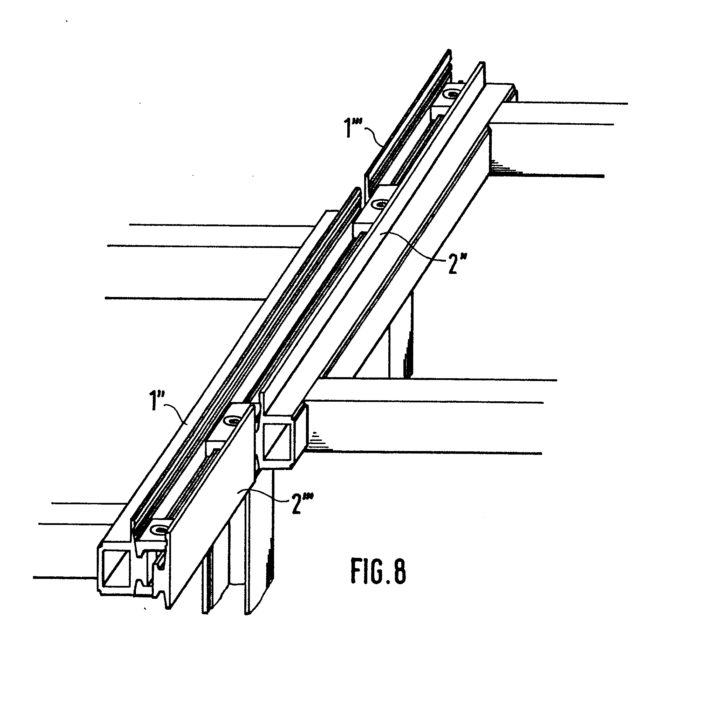

Aus Figur 8 ist ersichtlich, daß zwei Schreibtische, deren Tischplatten nicht dargestellt sind, in Längsrichtung

- 10 -

0179198

- 10 -

der Profile gegeneinander versetzt angeordnet sein können. Die von den Profilbereichen 1" und 1"' bzw. 2" und 2"' gebildeten Kanäle werden durch nicht dargestellte Kunststoffabdeckprofile im Gebrauchszustand verschlossen.

- *1* -

Patentansprüche:

1. Büromöbel, beispielsweise Schreibtisch, Schrank, Trennwand oder dergleichen, mit einem Metallgestell, dadurch gekennzeichnet, daß das Metallgestell ein erstes Profil (1) mit zwei einander gegenüberliegenden, zum Nutgrund sich verjüngenden Nuten (1a; 1b) aufweist, ferner ein zweites, gleichartiges Profil (2), das neben und parallel zu dem ersten (1) angeordnet ist, wobei zwei im Querschnitt etwa U-förmige Klemmelemente (3; 4) vorgesehen sind, deren Basis jeweils von einer gemeinsamen Spannschraube (5) durchsetzt ist, wobei jedes Klemmelement (3; 4) sowohl in eine Nut (1a; 1b) des ersten (1) und (2a; 2b) des zweiten Profils (2) eingreift.

2. Büromöbel nach Anspruch 1, dadurch gekennzeichnet, daß zwischen den Nuten (1a und 1b; 2a und 2b) eines jeden Profils ein metallischer Stegbereich (1c; 2c) vorgesehen ist und die Spannschraube (5) zum Zusammenziehen der U-förmigen Klemmelemente (3; 4) ausgebildet ist.

3. Büromöbel nach Anspruch 1, dadurch gekennzeichnet, daß die beiden Nuten (1"'a, 1"'b; 2"'a, 2"'b) eines jeden Profils (1"'; 2"') an einander gegenüberliegenden Wänden eines gemeinsamen Kanals angeordnet sind

- 2 -

und die Spannschraube (5") für ein Spreizen der
U-förmigen Klemmelemente (3; 4) ausgebildet ist.

4. Büromöbel nach einem oder mehrern der Ansprüche 1
bis 3,
dadurch gekennzeichnet,
daß mindestens eines der beiden Profile (1") und
mindestens eines der beiden Klemmstücke (4") mit
einem Metallrohr (14 bzw. 21) verbunden ist.

5. Büromöbel nach einem oder mehreren der Ansprüche 1 bis
4,
dadurch gekennzeichnet,
daß eines der Klemmstücke (4") mit einem Metallfuß
(21) verbunden ist.

6. Büromöbel nach einem oder mehreren der Ansprüche 1
bis 5,
dadurch gekennzeichnet,
daß die Profile (1; 2) gezogene Aluminiumprofile sind,
die über Schraubverbindungen mit den benachbarten
Möbelteilen verbunden sind.

7. Büromöbel nach einem oder mehreren der Ansprüche
1 bis 6,
dadurch gekennzeichnet,
daß auf einem der beiden Klemmelemente (3" ) ein
Vorsprung (21) zur Befestigung von Zusatzausrüstungsteilen (22) vorgesehen ist.

8. Büromöbel nach einem oder mehreren der Ansprüche
   1 bis 6,
   dadurch gekennzeichnet,
   daß auf einem der beiden Klemmelemente (3") eine
   Ausnehmung (21') zur Befestigung von Zusatzausrüstungsteilen (22) vorgesehen ist.

9. Büromöbel nach einem oder mehreren der Ansprüche
   1 bis 8,
   dadurch gekennzeichnet,
   daß die Seitenwände der sich zum Nutgrund verjüngenden
   Nuten (1a; 2a; 1b; 2b) in einem spitzen Winkel ($\alpha$)
   zueinander verlaufen und daß der Winkel ($\alpha'$)
   der damit korrespondierenden Außenflächen der Klemmelemente (3; 4) geringfügig größer ist.

10. Büromöbel nach einem oder mehreren der Ansprüche
    1 bis 9,
    dadurch gekennzeichnet,
    daß der Winkel ($\alpha$ bzw. $\alpha'$) der Nuten (1a; 2a;
    1 b ; 2b) bzw. der Klemmstücke (3; 4) etwa dem
    doppelten Winkel des Haftreibwertes entspricht.

11. Büromöbel nach einem oder mehreren der Ansprüche 1
    bis 10,
    dadurch gekennzeichnet,
    daß Kunststoffabdeckprofile (17) in benachbarte
    Bereiche unterschiedlicher Profile (1; 2) eingreifen.

FIG.1

FIG.2

FIG.3

FIG.3a

FIG.4

FIG.5

FIG.6

0179198

FIG.7

FIG.8